# FASCICULE DE BREVET EUROPEEN

(11) **EP 2 702 359 B1**
(45) Date de publication et mention de la délivrance du brevet: **11.07.2018**
(21) Numéro de dépôt: 12724707.0
(22) Date de dépôt: 23.04.2012
(51) Int. Cl.: G01C 21/36

(54) **PROCÉDÉ ET DISPOSITIF DE CRÉATION DE CARTES D'ITINÉRAIRES ET DE NAVIGATION A DONNÉES SYNTHÉTIQUES**
VERFAHREN UND VORRICHTUNG ZUR ERZEUGUNG VON FAHRTROUTEN UND NAVIGATIONSKARTEN AUS SYNTHETISCHEN DATEN
METHOD AND DEVICE FOR CREATING ITINERARY AND NAVIGATION MAPS WITH SYNTHETIC DATA

(30) Priorité: 26.04.2011 FR 1101282
(43) Date de publication de la demande: 05.03.2014
(73) Titulaire: Michelin Travel Partner, 92100 Boulogne-Billancourt (FR)
(72) Inventeur: HAYOT, Pierre, F-63040 Clermont -Ferrand cedex 9 (FR)
(74) Mandataire: Bauvir, Jacques
(86) Numéro de dépôt international: PCT/IB2012/000787
(87) Numéro de publication internationale: WO 2012/146966

(56) Documents cités:
- US-A1- 2009 112 462
- US-A1- 2010 217 515

## Description

### DOMAINE TECHNIQUE DE L'INVENTION

La présente invention concerne un procédé et un système de navigation comportant un serveur centralisé ayant un accès à des données de cartographie routière en relation avec au moins une zone géographique donnée et susceptible d'être en relation avec une pluralité de dispositifs de navigation mobiles prévus pour recevoir les données d'itinéraires établies par ledit serveur, un procédé de génération automatique de cartes d'itinéraires à données synthétiques pour serveur centralisé. Elle concerne plus particulièrement un procédé permettant de générer des cartes d'itinéraires complètes et exhaustives, utilisant un espace mémoire restreint.

### ETAT DE LA TECHNIQUE ANTERIEURE

Les dispositifs, procédé et système de préparation de cartes d'itinéraires sont bien connus et sont même devenus des outils d'usage courant pour un nombre considérablement important d'usagers de la route.

Par exemple, le document WO2006/042688 décrit un procédé de génération d'itinéraires indiquant, en plus d'un itinéraire optimal entre deux points donnés, les points de voisinage le long de cet itinéraire. Outre la présence des points de voisinage, qui permettent de faciliter le suivi de l'itinéraire grâce au repérage de points faciles à visualiser le long du tracé, ce document décrit un mode de présentation classique des itinéraires préparés avant le départ, à savoir une impression sur une ou plusieurs pages comportant des instructions écrites, et une ou plusieurs pages comportant des cartes routières sur lesquelles l'itinéraire établi est mis en évidence, par exemple par surlignage. Bien que ce type d'outil soit utile pour la préparation d'un déplacement, en permettant au conducteur de prendre connaissance de façon globale du parcours à venir, plusieurs inconvénients sont à noter lors de la phase de suivi de l'itinéraire sur la route. Pour un conducteur ou pour un passager agissant en tant que copilote, la manipulation de plusieurs pages pour un même secteur d'itinéraire est peu pratique. Par ailleurs, la lecture et la compréhension des instructions détaillées, sans relation précise avec la carte de l'itinéraire à effectuer, peuvent parfois être fastidieuses. Enfin, des détails visuels précis sur les manoeuvres à effecteur sont en général absents, causant parfois des risques d'erreur dans l'interprétation des instructions. Enfin, si un tel itinéraire, avec format cartographique complet doit être traité, sauvegardé ou transmis à un dispositif portable, la capacité mémoire, la puissance et la consommation de ressources au niveau du réseau requises seront relativement importantes, ce qui peut restreindre la liste des appareils compatibles. La consommation de bande passante imposée au réseau induit des coûts techniques tant du côté du dispositif qui reçoit les données que du côté du système qui procure les données. Une autre restriction provient du temps de transfert qui devient lui aussi excessif en raison des limitations techniques de débit des réseaux.

Le document FR 2 796 746 décrit un système d'affichage d'un itinéraire comportant des moyens de génération d'informations de carte de région limitée en forme d'une bande s'étendant le long d'un itinéraire. La largeur de la bande est adaptée en fonction de la capacité de mémorisation d'information du dispositif. Un tel dispositif ne permet cependant pas d'optimiser le format de la carte puisqu'il s'agit uniquement de procéder à une extraction de données en conservant le format initial. Par ailleurs, aucune explication ou instruction n'est fournie pour faciliter le suivi de cet itinéraire.

Le document US2006/0271277 décrit une carte de planification de voyage ou d'itinéraire comprenant l'affichage d'un itinéraire et d'éléments complémentaires à cet itinéraire, tels que des informations concernant les hôtels, les restaurants, les sites touristiques, etc. Ces données complémentaires sont intéressantes pour assurer le confort de l'agrément des passagers du véhicule, mais ne permettent pas de faciliter le suivi de l'itinéraire en tant que tel.

Le document US 2009/0112462 décrit un procédé et un dispositif d'affichage de manoeuvres de guidage pour faciliter le suivi d'un itinéraire par un conducteur. Le procédé et le dispositif ont pour objectif de prévoir un affichage et une présentation claire des données en relation avec un itinéraire à parcourir en donnant une priorité aux informations correspondant aux manoeuvres prévues à proximité de la position actualisée du véhicule. La solution décrite prévoit des données d'itinéraire comportant une succession de manoeuvres avec une vérification de la position réelle du véhicule afin d'identifier la prochaine manoeuvre à mettre en évidence, en la positionnant en tête de liste des manoeuvres à suivre. Toutefois, dans ce document, les instructions à suivre sont fournies sous la forme de manoeuvres («maneuver list»). Les données géographiques de noms de lieux («landmarks») sont fournies uniquement pour aider le conducteur à confirmer sa position géographique actuelle.

Le document US2010/0217515 décrit un procédé et un dispositif électronique d'affichage d'images de navigation routière. Le procédé et le dispositif ont pour objectif d'éviter l'utilisation de données de navigation stockées localement par chaque utilisateur, car ces données deviennent rapidement obsolètes. Un autre objectif consiste à éviter l'encombrement des réseaux d'échanges de données entre les serveurs de données et les utilisateurs mobiles pour les solutions faisant appel à des serveur effectuant les calculs d'itinéraires et transmettant ensuite les données de guidage aux utilisateurs. Ces serveurs sont facilement et régulièrement mis à jours et comportent de ce fait des données complètes et bien actualisées. Mais les nombreux échanges de données cartographiques avec des fichiers volumineux entre serveurs et utilisateurs contribuent à saturer les réseaux et à créer des retards de transmission.

La solution décrite dans le document US2010/0217515 prévoit que chaque utilisateur dispose en local d'une base de données de schémas de navigation simplifiés (ou pictogrammes) tels que des flèches, permettant d'indiquer à l'utilisateur les manoeuvres à effectuer de façon successive. Le serveur centralisé effectue le calcul d'itinéraire et transmet à l'utilisateur des données de localisation et des identifiants de schémas de navigation simplifiés. Sur la base des identifiants reçus et des données de localisation, les pictogrammes concernés sont affichés en fonction de la position du véhicule lors de son déplacement. Les transmissions de données sont ainsi réduites. Le procédé prévoit donc de présenter des pictogrammes tels que des flèches illustrant des virages. Par ailleurs, les noms de routes et dénominations (landmarks) sont utilisés uniquement afin d'indiquer les routes sur lesquelles l'utilisateur se trouve.

Ainsi, de manière générale, les procédés existants sont peu ergonomiques et sont généralement gourmands en capacité mémoire.

Pour pallier ces différents inconvénients, l'invention prévoit différents moyens techniques.

### EXPOSE DE L'INVENTION

Tout d'abord, un premier objet de l'invention consiste à prévoir un procédé de génération de cartes d'itinéraires permettant de générer des cartes d'itinéraires occupant un espace mémoire réduit ou minimalisé.

Un autre objet de l'invention consiste à prévoir un procédé de génération de cartes d'itinéraires avec une ergonomie optimisée, facilitant la compréhension et l'utilisation, en toute sécurité.

Un autre objet de l'invention consiste à prévoir un procédé de génération de carte d'itinéraire permettant de préparer de façon centralisée des cartes pour une pluralité d'utilisateurs mobiles situés à distance.

Encore un autre objet de l'invention consiste à prévoir un système de génération de cartes d'itinéraires occupant une surface minimale, mais sans affecter la clarté ou la qualité générale des données contenues.

Pour ce faire, l'invention prévoit un procédé de création de cartes d'itinéraires à données synthétiques selon la revendication 1 annexée.

Pour les portions d'itinéraires pour lesquelles des données de dénomination de direction à suivre sont disponibles dans les données cartographiques routières, les données de direction extraites permettent de créer une carte d'itinéraire sans devoir fournir de représentations cartographiques et/ou géométriques et/ou de pictogrammes donnant une par une les instructions ou manoeuvres à effectuer tout au long de l'itinéraire. L'utilisateur a une consigne de direction à suivre qui lui permet en général d'effectuer une pluralité de manoeuvres sans devoir se concentrer à chaque fois sur la manoeuvre en cours et celle à venir juste après. En effet, dans les systèmes de navigation classiques avec présentation successive des manoeuvres à effectuer, dans les cas où plusieurs manoeuvres se succèdent rapidement, la réception, la compréhension et la réalisation effective de ces manoeuvres est souvent une cause de stress pour le conducteur qui contribue à réduire son attention sur la conduite du véhicule et sur la surveillance des véhicules environnants.

Grâce à l'invention, on obtient ainsi des données de navigation routière rapidement perceptibles par l'utilisateur, faciles à interpréter, et avec une mise en pratique présentant une fiabilité élevée, du fait que l'utilisateur suit de façon instinctive les dénominations de direction à suivre en fonctions des noms de lieux ou de sites facilement visibles sur les panneaux routiers présents le long de l'itinéraire. Par ailleurs, les dénominations de direction sont des données numériques ne requérant en général que quelques kilooctets. Les fichiers de données correspondants requièrent donc un espace mémoire considérablement plus petit que les fichiers classiques d'itinéraires comprenant les données cartographiques (en général sous forme d'images de cartes) de toute la zone ou région où l'itinéraire passe. De tels fichiers d'itinéraires à données réduites peuvent facilement être gérées depuis un serveur centralisé, puis transmises par réseau non filaire à un très grand nombre de mobiles circulant sur le réseau routier correspondant, sans impliquer une consommation excessive des ressources techniques du réseau de transfert de données.

Le fait d'utiliser des données d'itinéraires synthétiques très concises permet une grande souplesse dans les modes de présentation à l'utilisateur. Les données d'itinéraire synthétique peuvent être facilement présentées sur support papier, sur un écran (même de petite taille), en projection sur le pare-brise d'un véhicule ou à l'aide de lunettes servant de support de projection, oralement, par synthèse vocale, etc. Les données d'itinéraire synthétique comportent les éléments essentiels pour assurer le suivi de l'itinéraire. La suppression de nombreux éléments visuels à caractère purement esthétique permet de faciliter la lecture, évite toute distraction de l'utilisateur-conducteur, et contribue ainsi à améliorer la sécurité routière.

De manière avantageuse, les indications géométriques de tronçons routiers à parcourir prennent la forme d'une représentation schématique des tronçons à parcourir pour suivre l'itinéraire calculé. Ces représentations schématiques, ou modèles géométriques de manoeuvre établis sur mesure, permettent de présenter essentiellement les tronçons servant à expliquer ou illustrer la manoeuvre à effectuer pour parcourir l'itinéraire prévu.

Dans une variante avantageuse, les indications géométriques de tronçons routiers à parcourir comportent par ailleurs un tracé de la portion d'itinéraire pour lesquels ces tronçons sont utiles.

Selon un mode de réalisation avantageux, les dénominations de direction à suivre sont obtenues à partir des données disponibles des panneaux routiers.

Selon une autre possibilité, les données de dénomination de direction à suivre sont présentées avec une mise en forme similaire à celle des panneaux routiers présents le long de l'itinéraire.

Dans un autre exemple, les données de direction utilisées sont des données partielles des panneaux correspondants, extraites des données des panneaux disponibles pour l'itinéraire calculé en fonction de l'itinéraire prévu.

Selon une autre possibilité, les dénominations de direction à suivre sont présentées en relation avec une représentation schématique simplifiée de la portion d'itinéraire correspondante.

Selon une autre possibilité, la représentation schématique simplifiée de la portion d'itinéraire correspondante est multi-échelles avec d'éventuelles déformations de certains tronçons par rapport à la représentation cartographique d'origine.

Également de manière avantageuse, les dénominations de direction à suivre utilisées comprennent des noms de ville ou de lieux ou des noms ou numéros de routes ou des numéros de sortie.

Dans un mode de réalisation avantageux, une ligne virtuelle d'itinéraire, sensiblement rectiligne, est définie, avec les points d'instructions répartis le long de la ligne. Dans un tel cas, la distance à parcourir entre deux points d'instructions est avantageusement intégrée schématiquement le long de la ligne d'itinéraire.

L'invention prévoit également un procédé de navigation pour système de navigation selon la revendication 6 annexée.

De manière avantageuse, le dispositif de navigation mobile dispose d'un module de géolocalisation pour recueillir les données de positionnement lorsque ledit mobile se déplace, et utilise les données de position pour présenter (visuellement -à l'aide d'un support de visualisation tel qu'un écran ou une zone de projection- ou oralement) les données de la carte synthétique en synchronisation avec le déplacement du dispositif mobile de navigation.

Dans une variante avantageuse, les dénominations de direction à suivre sont obtenues à partir des données disponibles des panneaux routiers.

Selon un mode de réalisation avantageux, les dénominations de direction à suivre utilisées comprennent des noms de ville ou de lieux ou des noms ou numéros de routes ou des numéros de sortie.

L'invention prévoit également un système de navigation selon la revendication 10 annexée.

Un tel système permet de formater les données de navigation de façon particulièrement compacte, en ne conservant que les données véritablement utiles à la compréhension et au suivi de l'itinéraire. Une telle mise en oeuvre permet des gains de place substantiels en évitant d'utiliser de la surface utile pour afficher des données non indispensables, voire peu ou pas utiles pour suivre l'itinéraire. L'utilisation d'une représentation schématique utilisant quelques tronçons clés, plutôt qu'un jeu de cartes de la zone couverte par l'itinéraire et des parties de cette zone permet de réduire de façon considérable la capacité mémoire et la puissance requises pour transmettre, stocker et/ou utiliser les cartes produites. Ainsi, un plus grand nombre de dispositifs sont susceptibles de pouvoir afficher les cartes générées par le procédé. La lecture et la compréhension de l'itinéraire sont grandement facilitées.

La suppression de la carte routière classique et son remplacement par des données de dénomination de directions à suivre et des représentations géométriques des tronçons pertinents permettent d'obtenir une représentation particulièrement dépouillée l'itinéraire. Pour l'utilisateur, qui ne cherche pas une représentation fidèle de la réalité physique, mais plutôt un guide directionnel facile à interpréter, un itinéraire synthétique tel que celui proposé n'engendre que peu ou pas d'inconvénients. En outre, une très grande partie des détails cartographiques présentés sur les cartes détaillées sont peu perceptibles depuis le véhicule lors du suivi de l'itinéraire. La suppression de ces détails ne nuit donc aucunement au suivi de l'itinéraire lors du déplacement du véhicule.

De manière avantageuse, le module de navigation comporte un module d'affichage de carte synthétique et/ou un module vocal de restitution de données.

Egalement de manière avantageuse, le module de navigation comporte un module de géolocalisation.

### DESCRIPTION DES FIGURES

Tous les détails de réalisation sont donnés dans la description qui suit, complétée par les figures 1 à 9, présentées uniquement à des fins d'exemples non limitatifs, et dans lesquelles :
- la figure 1 est une représentation schématique d'un système de navigation centralisé selon l'invention ;
- la figure 2 est une représentation schématique complémentaire du système de la figure 1, montrant une variante du dispositif mobile de navigation ;
- la figure 3 est un organigramme fonctionnel illustrant les principales étapes d'un procédé de génération de carte d'itinéraire selon l'invention ;
- les figures 4A, 4B et 4C sont des exemples de cartes d'itinéraire et de feuille de route selon la technique antérieure ;
- la figure 5 est une vue agrandie des premières manoeuvres d'un itinéraire (celui de la figure 6) représentées à l'aide d'indications géométriques ;
- la figure 6 présente un exemple de carte d'itinéraire générée à l'aide d'un procédé et d'un système de génération de carte d'itinéraire selon l'invention avec le sens de lecture du bas vers le haut du support ;
- les figures 7A et 7B montrent des variantes de présentation des éléments de direction ;
- les figures 8A et 8B permettent d'illustrer un exemple de modèle géométrique multi-échelle ;
- les figures 9A et 9B montrent des exemples d'éléments de direction avec données complètes ou données partielles de panneaux.

### DESCRIPTION DETAILLEE DE L'INVENTION

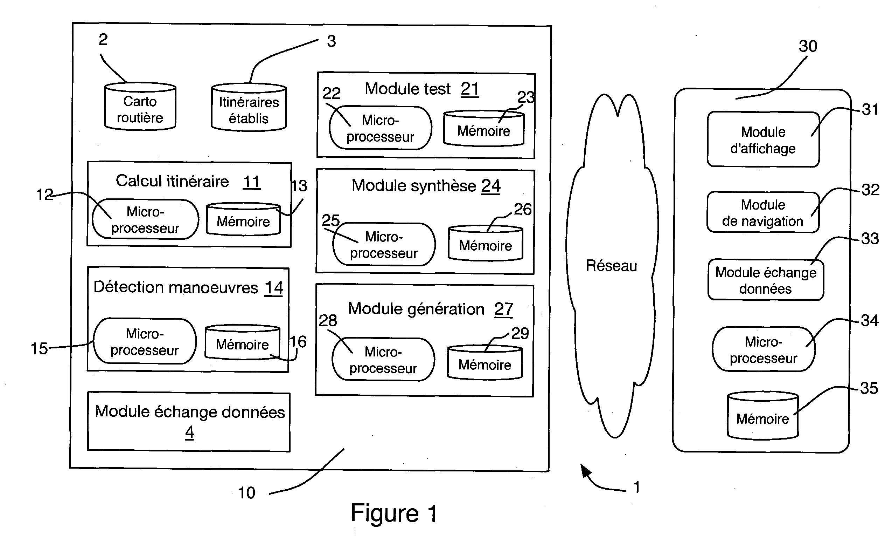

La figure 1 présente un exemple d'un mode de réalisation d'un système de navigation 1 selon l'invention. On retrouve d'une part un serveur d'itinéraires 10, prévu pour générer toutes les données en relation avec l'itinéraire pour lequel une carte doit être produite et la navigation effectuée. Le serveur d'itinéraire 10 comporte un module de calcul d'itinéraire 11, pourvu d'un microprocesseur 12 et d'une mémoire de travail 13 et un module de détection de manoeuvre 14, pourvu d'un microprocesseur 15 et d'une mémoire de travail 16. Selon diverses variantes les microprocesseurs 12 et 15, tout comme les mémoires de travail 13 et 16 peuvent être centralisés pour tous les modules du serveur 10, ou encore être agencés de façon externe, avec connexion aux différents modules. Les données utilisées proviennent avantageusement d'une base de données cartographiques routières 2 prévue au sein du serveur 10 tel que montré dans l'exemple illustrée, ou à un emplacement externe au serveur auquel le serveur peut accéder au besoin. De même, les itinéraires établis par le serveur peuvent être conservés dans une base de données d'itinéraires établis 3, prévue au sein du serveur 10 tel que montré dans l'exemple illustrée, ou à un emplacement externe au serveur auquel le serveur peut accéder au besoin.

Le module de calcul d'itinéraire 11 fonctionne de façon connue en soit, à l'aide d'un algorithme de détermination du plus court chemin entre deux points, tel que Dijkstra ou autre. Un tel algorithme permet, à l'aide d'un microprocesseur et des instructions requises, d'effectuer l'exploration d'un très grand nombre de possibilités (de quelques dizaines ou centaines pour des zones à faible densité et/ou pour des itinéraires courts à quelques centaines de milliers, voire plus, pour des zones à forte densité de routes et/ou pour des itinéraires longs) dans le but d'élire un itinéraire optimal en fonction de critères donnés, tels que l'itinéraire le plus court, ou le plus rapide, etc.

Une fois l'itinéraire connu, un module de détection de manoeuvre 14 permet de détecter les manoeuvres à effectuer le long de l'itinéraire en question. Par manoeuvre, on entend principalement une action de conduite d'un véhicule permettant de sélectionner un tronçon donné lorsque le conducteur se trouve face à une possibilité d'engager son véhicule vers une pluralité de tronçons (au moins deux). Le conducteur se trouve face à de multiples possibilités de poursuivre sa route, et une manoeuvre lui permet d'engager son véhicule en fonction de la direction prévue par l'itinéraire préétabli. Ainsi, le module 14 effectue un parcours virtuel de l'itinéraire établi par le module 11, et identifie les points ou noeuds où des tronçons multiples sont rattachés. Il peut s'agir d'intersection de routes, de sorties ou d'entrée sur autoroutes, et bifurcations, etc. Les manoeuvres sont déterminées de façon connues en soit. Pour un rond-point, il est entendu qu'une pluralité de manoeuvres simples sont en général impliquées, depuis l'entrée sur le rond-point, puis au passage de chaque sortie, impliquant à chaque fois une manoeuvre consistant soit à rester sur le rond-point ou à en sortir, jusqu'à la sortie effective du rond-point. Dans le présent document, les ronds-points sont considérés comme une seule manoeuvre, du type « prendre la 3^{e} sortie », consistant en fait à une manoeuvre complexe, tel qu'évoqué précédemment, ou de type « prendre à gauche », en considérant l'ensemble du rond-point comme un unique carrefour de plusieurs routes.

Le serveur d'itinéraires 10 comporte par ailleurs un module de test de données de direction 21, pourvu d'un microprocesseur 22 et d'une mémoire de travail 23, un module de synthèse 24, pourvu d'un microprocesseur 25 et d'une mémoire de travail 26, et d'un module de génération de carte d'itinéraire synthétique 27, pourvu d'un microprocesseur 28 et d'une mémoire de travail 29. Selon diverses variantes les microprocesseurs 22, 25 et 28, tout comme les mémoires de travail 23, 26 et 29 peuvent être centralisés pour tous les modules ou tout le système de génération de carte d'itinéraire, ou encore être agencés de façon externe, avec connexion aux différents modules. Le serveur d'itinéraires comporte enfin un module d'échange de données 4, conçu pour recevoir des requêtes d'itinéraires de dispositifs de navigation mobiles 30 avec des données de points de départ et d'arrivée, et pour transmettre à un dispositif de navigation mobile 30 (soit le dispositif demandeur ou un ou plusieurs autres) les données d'un itinéraire synthétique calculées par le serveur 10.

Le module de test de données de direction 21 est conçu pour vérifier dans les données cartographiques routières les manoeuvres pour lesquelles des données de direction à suivre sont disponibles. Ce test est effectué en amont de la génération de l'itinéraire synthétique, afin de permettre un traitement spécifique en fonction du résultat du test. Ainsi, si des données de direction sont disponibles, celles-ci sont utilisées pour constituer les données de l'itinéraire synthétique. Si aucune donnée de direction n'est disponible pour une ou plusieurs manoeuvres, le procédé prévoit, pour ces manoeuvres, une étape de reconstitution géométrique des tronçons utiles pour assurer le suivi des manoeuvres. Pour effectuer le test, le module de test de données de direction passe en revue l'ensemble des manoeuvres détectée pour un itinéraire donné, pour voir si les données cartographiques routières comprennent ou pas des données de direction à suivre. En pratique, ces données sont souvent présentes pour les grands axes routiers tels que les autoroutes ou les routes nationales. Elles peuvent être disponibles de façon plus importante lorsqu'elles sont obtenues par un système de traitement automatique d'images apte à reconnaître les panneaux pour en extraire les données, à partir de photographies panoramiques acquises de façon systématique par des véhicules spécialement équipés, ou par d'autres moyens équivalents. Le fait que le test de données de direction soit effectué par le serveur permet à l'ensemble des utilisateurs de bénéficier des mises à jour centralisées des bases de données cartographiques routières.

Le module de synthèse de données 24 intervient de façon distincte, en fonction des résultats de tests du module de test de données de direction. Ainsi, si des données de direction sont disponibles, ces données sont extraites pour la génération de l'itinéraire synthétique. Si des données de direction ne sont pas disponibles, le module de synthèse construit, à partir des données cartographiques routières, un modèle géométrique des tronçons routiers à parcourir pour effectuer l'itinéraire. Ainsi, en fonction des résultats des tests effectués par le module de test de données de direction, on obtient du module de synthèse des éléments d'itinéraires synthétique spécifiques.

Le module de génération 27 est conçu pour produire l'itinéraire synthétique à partir des données de direction à suivre et/ou des données de géométrie de manoeuvres obtenues du module de synthèse de données 24. Les données sont agencées en fonction de l'ordre des manoeuvres à effectuer pour effectuer l'itinéraire préalablement calculé. L'itinéraire synthétique contient, pour chaque manoeuvre de l'itinéraire, une succession d'éléments d'itinéraires ordonnés, comportant soit des données de direction à suivre, soit des données de géométrie de manoeuvres.

Un serveur d'itinéraire 10 est conçu pour être en communication, par exemple par l'entremise d'un réseau de télécommunication cellulaire ou autre, en fonction des besoins, avec une pluralité de dispositifs mobiles de navigation 30. Chacun des dispositifs de navigation mobile 30 dispose d'un module d'échange de données 33, conçu pour transmettre des requêtes d'itinéraires à un serveur d'itinéraire 10, et pour recevoir en retour les données d'un itinéraire synthétique calculées par le serveur 10. Les dispositifs de navigation 30 comprennent, en plus d'un microprocesseur 34 et d'une mémoire de travail 35, un module de navigation 32, pour assurer et gérer la transmission à l'utilisateur du module des données de l'itinéraire synthétique reçues d'un serveur d'itinéraire 10. Cette transmission peut être prévue par affichage sur un module d'affichage 31, et /ou par synthèse vocale. En fonction de besoins et des souhaits de l'utilisateur et/ou des modes de réalisation, la transmission des données d'itinéraire synthétique peut être effectuée soit préalablement à la réalisation effective de l'itinéraire sur la route pour information, soit en mode manuel, par exemple par déroulement des manoeuvres par l'utilisateur par exemple par glissement des doigts sur un écran tactile adapté, soit en mode navigation avec présentation des données en fonction de la position réelle du véhicule.

La mise en oeuvre des différents modules du serveur 10 et des dispositifs de navigation mobiles 30 préalablement décrits est avantageusement réalisée au moyen d'instructions de mise en oeuvre, permettant aux modules d'effectuer la ou les opérations spécifiquement prévues pour le module concerné. Les instructions peuvent être sous la forme d'un ou plusieurs logiciels ou modules de logiciels mis en oeuvre par un ou plusieurs microprocesseurs. Le ou les modules et/ou le ou les logiciels sont avantageusement prévus dans un produit programme d'ordinateur comprenant un support d'enregistrement ou medium d'enregistrement utilisable par un ordinateur et comportant un code programmé lisible par un ordinateur intégré dans ledit support ou médium, permettant à un logiciel applicatif son exécution sur un ordinateur ou autre dispositif comportant un microprocesseur tel qu'un dispositif de navigation.

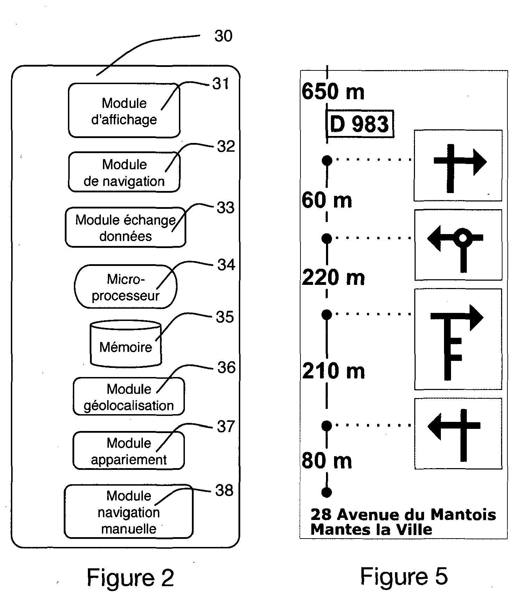

La figure 2 présente une variante d'un dispositif de navigation mobile 30 comportant en plus un module de géolocalisation 36 et un module d'appariement 37 adaptés d'une part pour recevoir les données de position du dispositif de navigation mobile 30 et d'autre part pour assurer une correspondance entre les données de position brutes reçues et les positions affectées aux manoeuvres de l'itinéraire synthétique. Cette variante comprend aussi un module de navigation manuelle 38 permettant à l'utilisateur de parcourir virtuellement l'itinéraire, en totalité ou par section, pour mieux anticiper les manoeuvres à venir, ou pour simple information, ou pour vérifier que l'itinéraire reçu convient.

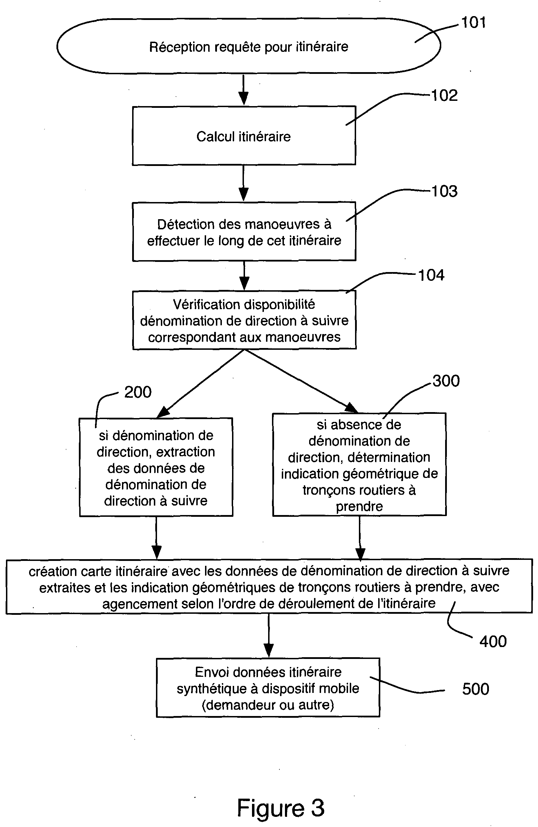

La figure 3 présente, de façon successive, les principales étapes du procédé selon l'invention. A l'étape 101, un serveur 10 reçoit une requête de calcul d'itinéraire. Par exemple, un utilisateur d'un dispositif de navigation mobile 30 envoie une requête au serveur avec lequel il est relié. La requête comporte avantageusement les données en relation avec le point de départ et le point d'arrivée. Ces données peuvent aussi être standardisées ou déjà mémorisés par le serveur. Une requête peut aussi provenir d'un tiers gestionnaire d'itinéraires à effectuer par un ou plusieurs utilisateurs.

A l'étape 102, l'itinéraire est calculé par le module de calcul d'itinéraire 10.

A l'étape 103 les manoeuvres permettant d'effectuer l'itinéraire préalablement calculé sont recherchées et détectées par le module de détection de manoeuvres 14, tel que préalablement décrit avec ce module.

A l'étape 104, le module de test de données de direction 21 contrôle, pour chacune des manoeuvres, les données cartographiques routières disponibles, pour déceler d'éventuelles données de directions à suivre. Suite à ce test, deux cas sont possibles, correspondant aux étapes 200 et 300, effectuées par le module de synthèse de données 24.

A l'étape 200, si, pour une manoeuvre, des données correspondant à une ou plusieurs directions à suivre sont disponibles, les données en question sont conservées pour l'étape 400 de création de la carte d'itinéraire.

A l'étape 300, si, pour une manoeuvre, des données correspondant à une ou plusieurs directions à suivre ne sont pas trouvées, le module de synthèse de données 24 génère, à partir des données cartographiques routières, un modèle géométrique de manoeuvre établi de préférence sur mesure, présentant essentiellement les tronçons servant à illustrer la manoeuvre à effectuer pour parcourir l'itinéraire prévu.

A l'étape 400, un module de génération de carte d'itinéraire synthétique 27 génère une carte d'itinéraire synthétique, comportant, dans l'ordre de réalisation des manoeuvres, une succession d'éléments d'itinéraires correspondant soit aux données de direction à suivre, soit aux données géométriques de manoeuvres à effectuer, selon les cas.

A l'étape 500, le module d'échange de données effectue l'envoi des données de l'itinéraire synthétique au dispositif de navigation mobiles correspondant.

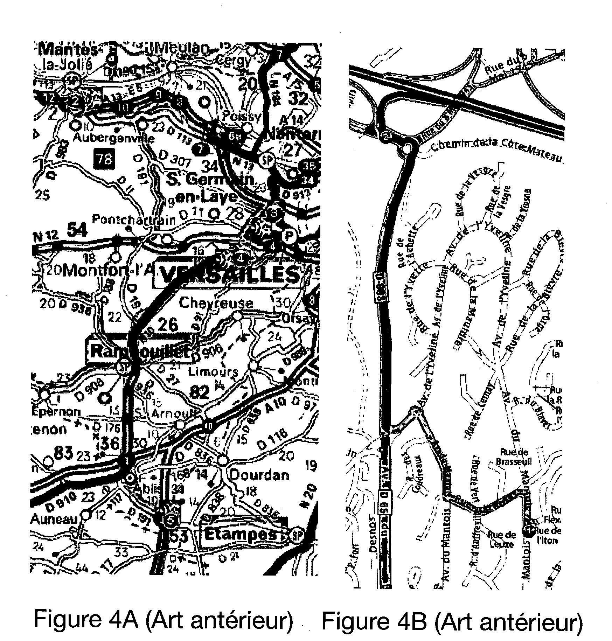

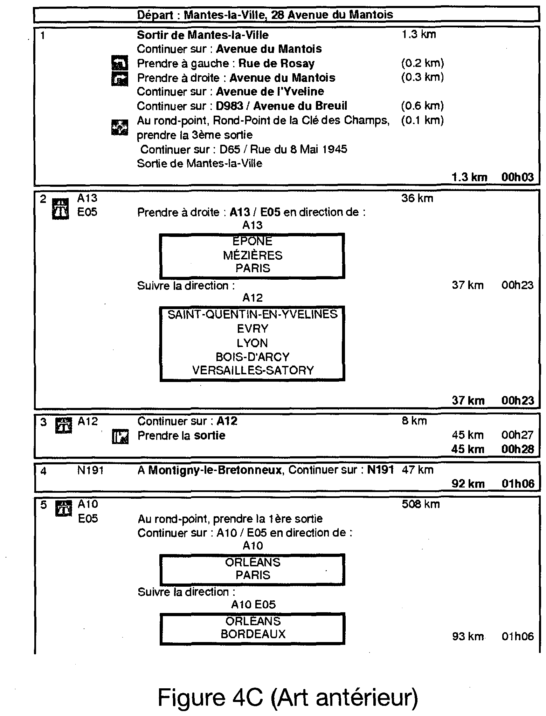

Les figures 4A, 4B et 4C montrent, en relation avec un itinéraire entre Mantes la ville et Arcangues, des exemples de cartes d'itinéraires obtenues selon les techniques de calcul et d'affichage connues. On observe aux figures 4A et 4B que l'itinéraire à parcourir est indiqué par un trait particulier appliqué sur la route de l'itinéraire. Ce trait est appliqué sur une carte routière classique, comportant tous les détails usuels tels que les noms de lieu, et parfois les numéros des routes principales. Une telle carte requiert en général une importante capacité mémoire et présente une ergonomie restreinte. Il est en effet souvent difficile de distinguer clairement le parcours choisi du reste des données affichées. Par ailleurs, du fait de l'utilisation d'une carte en format standardisé, il n'est pas possible d'effectuer des modifications de formes sans affecter les noeuds et tronçons se trouvant dans la zone environnante.

La figure 4C présente le même exemple d'itinéraire selon une technique antérieure d'affichage des manoeuvres avec les données textuelles correspondantes. Ces données écrites sont souvent fournies à l'utilisateur en plus des données cartographiques des figures 4A et 4B. Ici encore, l'utilisation nécessaire de l'ensemble des cartes détaillées implique la mise à disposition d'une importante capacité mémoire.

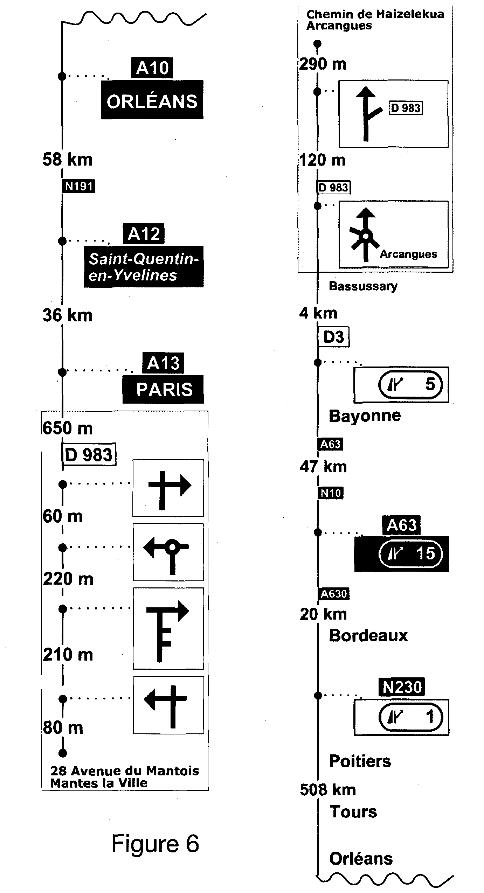

Les figures 5 et 6 montrent un exemple d'itinéraire synthétique obtenu selon le procédé de l'invention. Cet exemple correspond à un itinéraire identique à celui utilisé pour les figures 4A, 4B et 4C de la technique antérieure (de Mantes la Ville à Arcangues). A la figure 5, les premières manoeuvres sont présentées, grâce aux modèles géométriques construits à partir des données cartographiques routières. Dans cet exemple, les manoeuvres sont présentées selon un sens de lecture du bas vers le haut du support de lecture. La première manoeuvre correspond à un virage à gauche à effectuer au prochain tronçon traversant le tronçon actif. La deuxième manoeuvre correspond à un virage à droite à effectuer au troisième tronçon croisant le tronçon actif. La troisième manoeuvre correspond à un virage à gauche à effectuer au prochain rond-point. Enfin, la quatrième manoeuvre correspond à un virage à droite au prochain croisement. On constate que les modèles géométriques de manoeuvres sont générés au cas par cas, à partir des données réelles, de sorte que chaque carte d'itinéraire constitue un ensemble unique. Contrairement à la technique antérieure, le procédé selon l'invention ne fait pas appel à des dessins préétablis assimilables à des pictogrammes standards représentant quelques cas types tels que « tourner à gauche », « tourner à droite », « aller tout droit », etc, auxquels on tente de faire correspondre les manoeuvres. Dans une variante pour économiser le volume de données correspondant à un schéma unique établi sur mesure, on vérifie si la configuration géométrique d'un carrefour (ou autre manoeuvre) à représenter correspond à un cas type pour lequel un schémas est préalablement établis : si oui, le schémas type est utilisé ; sinon, un modèle sur mesure est établi.

Pour faciliter la lecture, l'itinéraire présenté à la figure 6 a été coupé en deux sections. La figure 6 montre, pour l'ensemble de l'itinéraire, les modèles géométriques pour les premières manoeuvres, puis les directions à suivre pour les manoeuvres suivantes. Enfin, les deux dernières manoeuvres sont indiquées à l'utilisateur à l'aide de modèles géométriques. Les directions à suivre sont basées sur des noms de villes ou lieux, dans cet exemple Paris, puis Saint-Quentin-en-Yvelines, puis Orléans. Ces dénominations sont avantageusement présentées avec un aspect évoquant le visuel des panneaux routiers que l'utilisateur pourra aisément reconnaître lorsqu'il sera sur la route, à l'endroit correspondant. Les directions peuvent aussi être basées sur des noms ou numéros de routes, comme par exemple N230 à la figure 6. Enfin, les directions peuvent aussi être basées sur des numéros de sorties, comme par exemple la sortie No 1, puis No 15 et No 5 à la figure 6. Plusieurs indications de directions peuvent être utilisées de façon simultanée ou complémentaires, comme par exemple l'autoroute A13 et Paris, précisant ainsi la route et la direction, A12 et Saint-Quentin-en-Yvelines, A10 et Orléans, A63 et sortie No 15, etc. Le fait d'adjoindre plusieurs éléments directionnels permet à l'utilisateur de repérer visuellement plusieurs panneaux, facilitant ainsi le suivi de l'itinéraire. L'utilisateur se voit par ailleurs conforté dans sa conduite évite de se questionner inutilement sur le fait de savoir s'il a pris ou non la bonne direction.

A la figure 6, une ligne virtuelle d'itinéraire, sensiblement rectiligne, est définie, avec les points d'instructions répartis le long de la ligne. Dans un tel cas, la distance à parcourir entre deux points d'instructions est avantageusement intégrée schématiquement le long de la ligne d'itinéraire.

L'exemple de la figure 6 comprend également des données de passage à proximité, telles que Orléans, Tours, Poitiers, Bordeaux. Ces données ne font pas partie des données habituellement disponibles dans les bases de données routières. Elles sont donc fournies à titre de référence, pour permettre à l'utilisateur de valider sa progression le long de l'itinéraire.

Dans l'exemple illustré aux figures 5 et 6, le sens de lecture est prévu de bas en haut du support, de façon à correspondre à une représentation de l'itinéraire avec la route devant le véhicule. Une telle représentation est très réaliste et instinctive et donc facile à interpréter, même avec un minimum de données. Par ailleurs, un tel type d'agencement correspond à un mode de plus en plus répandu, à savoir la représentation visuelle utilisée pour les dispositifs de navigation type GPS.

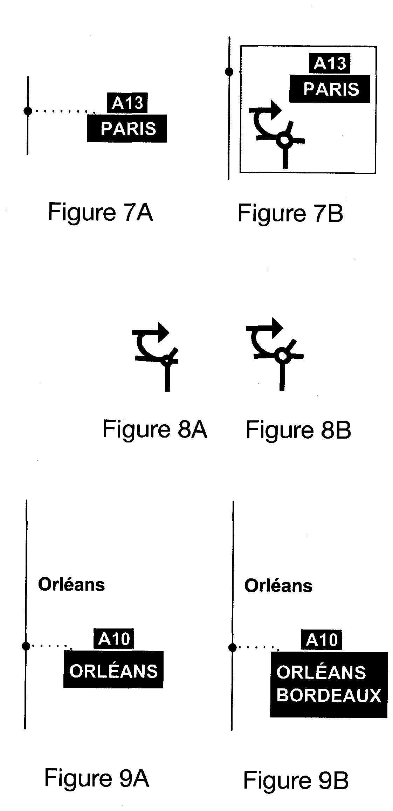

Les figures 7A et 7B montrent des variantes de présentation des éléments de direction : à la figure 7A, les éléments de direction sont utilisés seuls, tandis que dans la variante de la figure 7B, les données de direction sont présentées en relation avec une représentation schématique simplifiée de la portion d'itinéraire correspondante.

Les figures 8A et 8B permettent d'illustrer un exemple de modèle géométrique multi-échelles. Dans l'exemple de la figure 8A, le rond-point et la bretelle sont sensiblement à la même échelle, tandis que dans l'exemple de la figure 8B, le rond-point est représenté à une échelle plus grande que la bretelle d'entrée sur l'autoroute. L'utilisation d'échelles différentes permet de présenter certains éléments d'un schéma avec plus de détails, sans pour autant avoir besoin d'agrandir tous les éléments, permettant ainsi de conserver un schéma compact. Par ailleurs, on peut ainsi attirer l'attention de l'utilisateur sur certaines manoeuvres plus complexes.

Les figures 9A et 9B montrent des exemples d'éléments de direction avec données complètes ou données partielles de panneaux : à l'exemple de la figure 9A, les données de direction correspondent à des extraits des données du panneau correspondant. L'exemple de la figure 9B montre des données de direction avec un panneau similaire à celui présent sur la route.

Les Figures et leurs descriptions faites ci-dessus illustrent l'invention plutôt qu'elles ne la limitent. En particulier, l'invention et ses différentes variantes viennent d'être décrites en relation avec un exemple particulier de format comportant un axe d'orientation dans le sens vertical du support.

Néanmoins, il est évident pour un homme du métier que l'invention peut être étendue à d'autres modes de réalisation dans lesquels, en variantes, on prévoit d'orienter les manoeuvres de gauche à droite, ou de haut en bas, ou autrement.

L'étendue de la protection conférée est déterminée par les revendications annexées.

Les signes de références dans les revendications n'ont aucun caractère limitatif. Les verbes « comprendre » et « comporter » n'excluent pas la présence d'autres éléments que ceux listés dans les revendications. Le mot « un » précédant un élément n'exclut pas la présence d'une pluralité de tels éléments.

## Revendications

1. Procédé de création de cartes d'itinéraires à données synthétiques pour serveur centralisé (10) ayant accès à des données cartographiques routières permettant de calculer des itinéraires en relation avec au moins une zone géographique donnée, comprenant les étapes consistant à :
- recevoir, au moyen d'un module d'échange de données (4) d'un serveur centralisé (10), les données d'au moins un point de départ et un point de destination pour un itinéraire à calculer ;
- calculer, au moyen d'un module de calcul d'itinéraire (11), au moins un itinéraire entre un point de départ et un point d'arrivée ;
- identifier, à l'aide d'un module de détection de manoeuvres (14), les manoeuvres le long de l'itinéraire;
- vérifier, pour chacune des manoeuvres, à l'aide d'un module de test de données de dénomination de direction à suivre (21), si une dénomination de direction à suivre est disponible dans les données cartographiques routières à disposition ;
- si une dénomination de direction à suivre est disponible dans les données cartographiques routières, extraire, à l'aide d'un module de synthèse de données (24), les données de dénomination de direction à suivre ;
- si une dénomination de direction à suivre n'est pas disponible dans les données cartographiques routières, générer, à l'aide d'un module de synthèse de données (24), à partir des données cartographiques routières, des indications géométriques de tronçons routiers à parcourir, lesdites indications étant basées sur la géométrie effective des tronçons de la portion concernée d'itinéraire ;
- générer, à l'aide d'un module de génération de carte synthétique (27), une carte d'itinéraire comportant, dans l'ordre de suivi des manoeuvres de l'itinéraire :
- pour les portions d'itinéraires pour lesquelles une indication de direction est disponible dans les données cartographiques routières, les données de dénomination de direction à suivre extraites, fournies seules ;
- pour les portions d'itinéraire pour lesquelles une dénomination de direction à suivre n'est pas disponible dans les données cartographiques routières, les indications géométriques de tronçons à parcourir fournies ;
- transmettre, à l'aide d'un module d'échange de données, les données de l'itinéraire synthétique établi à au moins un dispositif de navigation mobile (30) ;
- fournir à un utilisateur du dispositif de navigation mobile (30), les données de l'itinéraire synthétique reçu du serveur d'itinéraire (10).

2. Procédé de création de cartes d'itinéraires selon la revendication 1, dans lequel les indications géométriques de tronçons routiers à parcourir prennent la forme d'une représentation schématique des tronçons à parcourir pour suivre l'itinéraire calculé.

3. Procédé de création de cartes d'itinéraires selon l'une des revendications 1 ou 2, dans lequel les indications géométriques de tronçons routiers à parcourir comportent par ailleurs un tracé de la portion d'itinéraire pour lesquels ces tronçons sont utiles.

4. Procédé de création de cartes d'itinéraires selon l'une des revendications 1 à 3, dans lequel les dénominations de direction à suivre sont obtenues à partir des données disponibles des panneaux routiers.

5. Procédé de création de cartes d'itinéraires selon l'une des revendications 1 à 4 dans lequel les dénominations de direction à suivre utilisées comprennent des noms de ville ou de lieux ou des noms ou numéros de routes ou des numéros de sortie.

6. Procédé de navigation pour système de navigation comportant les étapes dans lesquelles :
- un dispositif de navigation mobile (30) envoie une demande d'itinéraire à un serveur d'itinéraires (10);
- le serveur (10) effectue un calcul d'itinéraire correspondant à la requête ;
- le serveur (10) identifie les manoeuvres le long de l'itinéraire;
- pour chacune des manoeuvres, le serveur vérifie si une dénomination de direction à suivre est disponible dans les données cartographiques routières à disposition ;
- si une dénomination de direction à suivre est disponible dans les données cartographiques routières, le serveur extrait les données de dénomination de direction à suivre ;
- si une dénomination de direction à suivre n'est pas disponible dans les données cartographiques routières, le serveur génère, à partir des données cartographiques routières, des indications géométriques de tronçons routiers à parcourir, lesdites indications étant basées sur la géométrie effective des tronçons de la portion concernée d'itinéraire ;
- le serveur crée une carte d'itinéraire synthétique comportant, dans l'ordre de suivi des manoeuvres de l'itinéraire :
- pour les portions d'itinéraires pour lesquelles une dénomination de direction à suivre est disponible dans les données cartographiques numériques, les dites dénominations de direction à suivre extraites, fournies seules ;
- pour les portions d'itinéraire pour lesquelles une dénomination de direction à suivre n'est pas disponible dans les données cartographiques numériques, les indications géométriques de tronçons routiers à parcourir fournies ;
- le serveur envoie les données de l'itinéraire synthétique à un dispositif de navigation mobile (30) ;
- le dispositif de navigation mobile fournit à l'utilisateur les données de la carte d'itinéraire synthétique.

7. Procédé de navigation selon la revendication 6, dans lequel le dispositif de navigation mobile (30) dispose d'un module de géolocalisation (36) pour recueillir les données de positionnement lorsque ledit mobile se déplace, et utilise les données de position pour présenter les données de la carte synthétique en synchronisation avec le déplacement du dispositif mobile de navigation.

8. Procédé de navigation selon l'une des revendications 6 ou 7, dans lequel les dénominations de direction à suivre sont obtenues à partir des données disponibles des panneaux routiers.

9. Procédé de navigation selon l'une des revendications 6 à 8, dans lequel les dénominations de direction à suivre utilisées comprennent des noms de ville ou de lieux ou des noms ou numéros de routes ou des numéros de sortie.

10. Système de navigation (1) comportant un serveur centralisé (10) ayant un accès à des données de cartographie routière (2) en relation avec au moins une zone géographique donnée et susceptible d'être en relation avec une pluralité de dispositifs de navigation mobiles (30) prévus pour recevoir les données d'itinéraires établies par ledit serveur, dans lequel :
- le serveur centralisé (10) comporte :
- un module d'échange de données (4) ;
- un module de calcul d'itinéraire (11) ;
- un module de détection de manoeuvres (14) le long de l'itinéraire ;
- un module de test de données de dénomination de direction à suivre (21), adapté pour vérifier, pour chaque manoeuvre identifiée, si des données de dénomination de direction à suivre sont prévues dans les données cartographiques routières disponibles;
- un module de synthèse de données (24), adapté pour extraire les données de dénomination de direction à suivre pour les tronçons pour lesquels ces données ont été identifiées afin de les fournir seules, et, pour les manoeuvres pour lesquelles aucune donnée de dénomination de direction à suivre n'est disponible, générer des indications géométriques de tronçons routiers à parcourir, lesdites indications étant basées sur la géométrie effective des tronçons concernés de l'itinéraire ;
- un module de génération de carte d'itinéraire synthétique (27), adapté pour agencer les données du module de synthèse (24) dans un ordre en correspondance avec l'ordre suivi des manoeuvres de l'itinéraire à effectuer, afin de générer une carte d'itinéraire comportant :
- pour les portions d'itinéraires pour lesquelles une indication de direction est disponible dans les données cartographiques routières, les données de dénomination de direction à suivre extraites, fournies seules ;
- pour les portions d'itinéraire pour lesquelles une dénomination de direction à suivre n'est pas disponible dans les données cartographiques routières, les indications géométriques de tronçons à parcourir fournies ;
et dans lequel les dispositifs mobiles de navigation comportent :
-un microprocesseur (34) ;
-une mémoire de travail (35) ;
-un module d'échange de données (33), pour recevoir les données d'itinéraire d'un serveur d'itinéraire (10) ;
-un module de navigation (32), pour assurer la transmission à l'utilisateur des données d'itinéraire synthétique reçues d'un serveur d'itinéraire.

11. Système de navigation selon la revendication 10, dans lequel le module de navigation (32) comporte un module d'affichage (31) de carte synthétique et/ou un module vocal de restitution de données.

12. Système de navigation selon l'une des revendications 10 ou 11, dans lequel le module de navigation (32) comporte un module de géolocalisation (36).

## Patentansprüche

1. Verfahren zur Herstellung von Fahrstreckenkarten mit künstlichen Daten für einen zentralen Server (10), der Zugriff auf kartografische Straßendaten hat, die es ermöglichen, Fahrstrecken im Verhältnis zu mindestens einem gegebenen geografischen Bereich zu berechnen, umfassend die Schritte, die aus Folgendem bestehen:
- Empfangen, mit Hilfe eines Datenaustauschmoduls (4) von einem zentralen Server (10), der Daten von mindestens einem Ausgangspunkt und einem Zielpunkt für eine zu berechnende Fahrstrecke;
- Berechnen, mit Hilfe eines Berechnungsmoduls einer Fahrstrecke (11), mindestens einer Fahrstrecke zwischen einem Ausgangspunkt und einem Ankunftspunkt;
- Identifizieren, mit Hilfe eines Detektierungsmoduls von Manövern (14), der Manöver entlang der Fahrstrecke;
- Überprüfen, für jedes der Manöver, mit Hilfe eines Prüfmoduls von Daten zur Benennung der zu verfolgenden Richtung (21), ob eine Benennung der zu verfolgenden Richtung in den zur Verfügung stehenden kartografischen Straßendaten verfügbar ist;
- wenn eine Benennung der zu verfolgenden Richtung in den kartografischen Straßendaten verfügbar ist, Extrahieren, mit Hilfe eines Synthesemoduls für Daten (24), der Daten zur Benennung der zu verfolgenden Richtung;
- wenn eine Benennung der zu verfolgenden Richtung in den kartografischen Straßendaten nicht verfügbar ist, Erzeugen, mit Hilfe des Synthesemoduls für Daten (24), ausgehend von den kartografischen Straßendaten, geometrischer Angaben von zu durchfahrenden Straßenteilabschnitten, wobei die Angaben auf der effektiven Geometrie der Teilabschnitte des betreffenden Abschnitts der Fahrstrecke beruhen;
- Erzeugen, mit Hilfe eines Erzeugungsmoduls einer künstlichen Karte (27), einer Fahrstreckenkarte, die in der Reihenfolge des Ablaufs der Manöver der Fahrstrecke Folgendes umfasst:
- für die Abschnitte der Fahrstrecke, für welche eine Richtungsangabe in den kartografischen Straßendaten verfügbar ist, die extrahierten Daten zur Benennung der zu verfolgenden Richtung, die allein geliefert werden;
- für die Abschnitte der Fahrstrecke, für welche eine Benennung der zu verfolgenden Richtung in den kartografischen Straßendaten nicht verfügbar ist, die gelieferten geometrischen Angaben der zu durchfahrenden Teilabschnitte;
- Übertragen, mit Hilfe eines Datenaustauschmoduls, der Daten der hergestellten künstlichen Fahrstrecke an mindestens eine mobile Navigationsvorrichtung (30) ;
- Liefern, an einen Benutzer der mobilen Navigationsvorrichtung (30), der Daten der künstlichen Fahrstrecke, die von dem Server der Fahrstrecke (10) empfangen wird.

2. Verfahren zur Herstellung von Fahrstreckenkarten nach Anspruch 1, wobei die geometrischen Angaben der zu durchfahrenden Straßenteilabschnitte die Form einer schematischen Darstellung von zu durchfahrenden Teilabschnitten annehmen, um die berechnete Fahrstrecke zu verfolgen.

3. Verfahren zur Herstellung von Fahrstreckenkarten nach einem der Ansprüche 1 oder 2, wobei die geometrischen Angaben von zu durchfahrenden Straßenteilabschnitten darüber hinaus eine Skizze des Fahrstreckenabschnitts umfassen, für welche diese Teilabschnitte nützlich sind.

4. Verfahren zur Herstellung von Fahrstreckenkarten nach einem der Ansprüche 1 bis 3, wobei die Benennungen der zu verfolgenden Richtung ausgehend von den verfügbaren Daten der Straßenschilder erhalten werden.

5. Verfahren zur Herstellung von Fahrstreckenkarten nach einem der Ansprüche 1 bis 4, wobei die verwendeten Benennungen der zu verfolgenden Richtung Namen von Städten oder Ortschaften oder Namen oder Nummern von Straßen oder Ausfahrtsnummern aufweisen.

6. Navigationsverfahren für ein Navigationssystem, umfassend die nachfolgenden Schritte, wobei:
- eine mobile Navigationsvorrichtung (30) eine Fahrstreckenanfrage an einen Server für Fahrstrecken (10) richtet;
- der Server (10) eine Fahrstreckenberechnung entsprechend der Anforderung durchführt;
- der Server (10) die Manöver entlang der Fahrstrecke identifiziert;
- für jedes der Manöver, der Server überprüft, ob eine Benennung der zu verfolgenden Richtung in den zur Verfügung stehenden kartografischen Straßendaten verfügbar ist;
- wenn eine Benennung der zu verfolgenden Richtung in den kartografischen Straßendaten verfügbar ist, der Server die Daten zur Benennung der zu verfolgenden Richtung extrahiert;
- wenn eine Benennung der zu verfolgenden Richtung in den kartografischen Straßendaten nicht verfügbar ist, der Server, ausgehend von den kartografischen Straßendaten, geometrische Angaben von zu durchfahrenden Straßenteilabschnitten erzeugt, wobei die Angaben auf der effektiven Geometrie der Teilabschnitte des betreffenden Abschnitts der Fahrstrecke beruhen;
- der Server eine künstliche Fahrstreckenkarte erstellt, die in der Reihenfolge der Abfolge der Manöver der Fahrstrecke Folgendes umfasst:
- für die Abschnitte von Fahrstrecken, für welche eine Benennung der zu verfolgenden Richtung in den digitalen kartografischen Daten verfügbar ist, diese extrahierten Benennungen der zu verfolgenden Richtung, die allein geliefert werden;
- für die Abschnitte der Fahrstrecke, für welche eine Benennung der zu verfolgenden Richtung in den digitalen kartografischen Daten nicht verfügbar ist, die gelieferten geometrischen Angaben der zu durchfahrenden Teilabschnitte;
- der Server die Daten der künstlichen Fahrstrecke an eine mobile Navigationsvorrichtung (30) sendet;
- die mobile Navigationsvorrichtung dem Benutzer die Daten der Karte der künstlichen Fahrstrecke liefert.

7. Navigationsverfahren nach Anspruch 6, wobei die mobile Navigationsvorrichtung (30) über ein Standortbestimmungsmodul (36) verfügt, um die Positionierungsdaten zu erfassen, wenn sich dieses Mobile bewegt, und die Positionsdaten verwendet, um die Daten der künstlichen Karte synchron mit der Bewegung der mobilen Navigationsvorrichtung zu präsentieren.

8. Navigationsverfahren nach einem der Ansprüche 6 oder 7, wobei die Benennungen der zu verfolgenden Richtung ausgehend von den verfügbaren Daten der Straßenschilder erhalten werden.

9. Navigationsverfahren nach einem der Ansprüche 6 bis 8, wobei die verwendeten Benennungen der zu verfolgenden Richtung Namen von Städten oder Ortschaften oder Namen oder Nummern von Straßen oder Ausfahrtsnummern aufweisen.

10. Navigationssystem (1), umfassend einen zentralen Server (10) mit einem Zugang zu den Daten der Straßenkartografie (2) im Verhältnis zu mindestens einem gegebenen geografischen Bereich und von dem angenommen wird, dass er mit einer Vielzahl von mobilen Navigationsvorrichtungen (30) in Verbindung steht, die dazu vorgesehen sind, die durch diesen Server hergestellten Fahrstreckendaten zu empfangen, wobei:
- der zentrale Server (10) Folgendes umfasst:
- ein Datenaustauschmodul (4);
- ein Berechnungsmodul einer Fahrstrecke (11);
- ein Detektierungsmodul von Manövern (14) entlang der Fahrstrecke;
- ein Prüfmodul von Daten zur Benennung der zu verfolgenden Richtung (21), das dazu eingerichtet ist, für jedes identifizierte Manöver zu überprüfen, ob die Daten zur Benennung der zu verfolgenden Richtung in den verfügbaren kartografischen Straßendaten vorgesehen sind;
- ein Synthesemodul für Daten (24), das dazu eingerichtet ist, die Daten zur Benennung der zu verfolgenden Richtung für die Teilabschnitte zu extrahieren, für welche diese Daten identifiziert wurden, um sie allein zu liefern, und, für die Manöver, für welche überhaupt keine Daten zur Benennung der zu verfolgenden Richtung verfügbar sind, Erzeugen der geometrischen Angaben von zu durchfahrenden Straßenteilabschnitten, wobei die Angaben auf der tatsächlichen Geometrie der betreffenden Teilabschnitte der Fahrstrecke beruhen;
- ein Erzeugungsmodul der künstlichen Fahrstreckenkarte (27), das dazu eingerichtet ist, die Daten des Synthesemoduls (24) in einer Reihenfolge in Übereinstimmung mit der Reihenfolge des Ablaufs der Manöver der durchzuführenden Fahrstrecke anzuordnen, um eine Fahrstreckenkarte zu erzeugen, die Folgendes umfasst:
- für die Abschnitte von Fahrstrecken, für welche eine Richtungsangabe in den kartografischen Straßendaten verfügbar ist, die extrahierten Daten zur Benennung der zu verfolgenden Richtung, die allein geliefert werden;
- für die Abschnitte der Fahrstrecke, für welche eine Benennung der zu verfolgenden Richtung in den kartografischen Straßendaten nicht verfügbar ist, die gelieferten geometrischen Angaben von zu durchfahrenden Teilabschnitten;
und wobei die mobilen Navigationsvorrichtungen Folgendes umfassen:
- einen Mikroprozessor (34);
- einen Arbeitsspeicher (35);
- ein Datenaustauschmodul (33), um die Fahrstreckendaten von einem Fahrstreckenserver (10) zu empfangen;
- ein Navigationsmodul (32), um die Übertragung an einen Benutzer der Daten der künstlichen Fahrstrecke sicherzustellen, die von einem Fahrstreckenserver empfangen werden.

11. Navigationssystem nach Anspruch 10, wobei das Navigationsmodul (32) ein Anzeigemodul (31) der künstlichen Karte und/oder ein Sprachmodul zur Wiedergabe von Daten umfasst.

12. Navigationssystem nach einem der Ansprüche 10 oder 11, wobei das Navigationsmodul (32) ein Standortbestimmungsmodul (36) umfasst.

## Claims

1. Method for creating synthetic data itinerary maps for a centralized server (10) having access to road map data for calculating itineraries in relation to at least one given geographical area, comprising steps of:
- receiving, by way of a data exchange module (4) of a centralized server (10), the data of at least one starting point and a destination point for an itinerary to be calculated;
- calculating, by way of an itinerary calculation module (11), at least one itinerary between a starting point and an arrival point;
- identifying, using a manoeuvre detection module (14), the manoeuvres along the itinerary;
- verifying, for each of the manoeuvres, using a module (21) for testing data specifying a direction to be followed, whether a specification of a direction to be followed is available in the available road map data;
- if a specification of a direction to be followed is available in the road map data, extracting, using a data synthesis module (24), the data specifying a direction to be followed;
- if a specification of a direction to be followed is not available in the road map data, generating, using a data synthesis module (24), from the road map data, geometrical indications of road sections to be travelled, said indications being based on the effective geometry of the sections of the itinerary portion in question;
- generating, using a synthetic map generation module (27), an itinerary map including, in the order in which the manoeuvres of the itinerary are followed:
- for the itinerary portions for which a direction indication is available in the road map data, the extracted data specifying a direction to be followed, provided on their own;
- for the itinerary portions for which a specification of a direction to be followed is not available in the road map data, the supplied geometrical indications of sections to be travelled;
- transmitting, using a data exchange module, the data of the established synthetic itinerary to at least one mobile navigation device (30);
- supplying, to a user of the mobile navigation device (30), the data of the synthetic itinerary received from the itinerary server (10).

2. Method for creating itinerary maps according to Claim 1, wherein the geometrical indications of road sections to be travelled take the form of a schematic representation of the sections to be travelled in order to follow the calculated itinerary.

3. Method for creating itinerary maps according to either of Claims 1 and 2, wherein the geometrical indications of road sections to be travelled additionally include an outline of the itinerary portion for which these sections are useful.

4. Method for creating itinerary maps according to one of Claims 1 to 3, wherein the specifications of a direction to be followed are obtained from data available on road signs.

5. Method for creating itinerary maps according to one of Claims 1 to 4, wherein the specifications of a direction to be followed that are used comprise names of towns or of locations or names or numbers of roads or junction numbers.

6. Navigation method for a navigation system, including steps in which:
- a mobile navigation device (30) sends an itinerary request to an itinerary server (10);
- the server (10) calculates an itinerary corresponding to the request;
- the server (10) identifies the manoeuvres along the itinerary;
- for each of the manoeuvres, the server verifies whether a specification of a direction to be followed is available in the available road map data;
- if a specification of a direction to be followed is available in the road map data, the server extracts the data specifying a direction to be followed;
- if a specification of a direction to be followed is not available in the road map data, the server generates, from the road map data, geometrical indications of road sections to be travelled, said indications being based on the effective geometry of the sections of the itinerary portion in question;
- the server creates a synthetic itinerary map including, in the order in which the manoeuvres of the itinerary are followed:
- for the itinerary portions for which a specification of a direction to be followed is available in the digital map data, said extracted specifications of a direction to be followed, provided on their own;
- for the itinerary portions for which a specification of a direction to be followed is not available in the digital map data, the supplied geometrical indications of road sections to be travelled;
- the server sends the data of the synthetic itinerary to a mobile navigation device (30);
- the mobile navigation device supplies the user with the data of the synthetic itinerary map.

7. Navigation method according to Claim 6, wherein the mobile navigation device (30) has a geolocation module (36) for gathering positioning data when said mobile moves, and uses the position data to present the data of the synthetic map synchronously with the movement of the mobile navigation device.

8. Navigation method according to either of Claims 6 and 7, wherein the specifications of a direction to be followed are obtained from data available on road signs.

9. Navigation method according to one of Claims 6 to 8, wherein the specifications of a direction to be followed that are used comprise names of towns or of locations or names or numbers of roads or junction numbers.

10. Navigation system (1) including a centralized server (10) having access to road map data (2) in relation to at least one given geographical area and able to be linked to a plurality of mobile navigation devices (30) intended to receive the itinerary data established by said server, wherein:
- the centralized server (10) includes:
- a data exchange module (4);
- an itinerary calculation module (11);
- a module (14) for detecting manoeuvres along the itinerary;
- a module (21) for testing data specifying a direction to be followed, designed to verify, for each identified manoeuvre, whether data specifying a direction to be followed are provided in the available road map data;
- a data synthesis module (24), designed to extract the data specifying a direction to be followed for the sections for which these data have been identified so as to provide them on their own and, for the manoeuvres for which no data specifying a direction to be followed is available, generate geometrical indications of road sections to be travelled, said indications being based on the effective geometry of the itinerary sections in question;
- a synthetic itinerary map generation module (27), designed to arrange the data from the synthesis module (24) in an order matching the order in which the manoeuvres of the itinerary to be taken are followed, so as to generate an itinerary map including:
- for the itinerary portions for which a direction indication is available in the road map data, the extracted data specifying a direction to be followed, provided on their own;
- for the itinerary portions for which a specification of a direction to be followed is not available in the road map data, the supplied geometrical indications of sections to be travelled;
and wherein the mobile navigation devices include:
- a microprocessor (34);
- a working memory (35);
- a data exchange module (33), for receiving the itinerary data from an itinerary server (10);
- a navigation module (32), for transmitting synthetic itinerary data received from an itinerary server to the user.

11. Navigation system according to Claim 10, wherein the navigation module (32) includes a synthetic map display module (31) and/or a voice-based data playback module.

12. Navigation system according to either of Claims 10 and 11, wherein the navigation module (32) includes a geolocation module (36).
